# EUROPEAN PATENT APPLICATION

(11) **EP 3 605 556 A1**
(43) Date of publication of application: **05.02.2020**
(21) Application number: 18776838.7
(22) Date of filing: 05.03.2018
(51) Int. Cl.: H01B 1/06, H01M 10/056

(54) **SEMISOLID ELECTROLYTE LAYER, BATTERY CELL SHEET AND SECONDARY BATTERY**

(30) Priority: 29.03.2017 JP 2017064155
(71) Applicant: Hitachi, Ltd., Tokyo 100-8280 (JP)
(72) Inventor: UNEMOTO Atsushi, Tokyo 100-8280 (JP); UEDA Suguru, Tokyo 100-8280 (JP); IIJIMA Atsushi, Tokyo 100-8280 (JP); TANAKA Akihide, Tokyo 100-8280 (JP); KAWAJI Jun, Tokyo 100-8280 (JP)
(74) Representative: MERH-IP Matias Erny Reichl Hoffmann Patentanwälte PartG mbB
(86) International application number: PCT/JP2018/008401
(87) International publication number: WO 2018/180258

(57) **Abstract**

An object of the present invention is to improve the electrical conductivity of a semisolid electrolyte layer. In order to achieve the object, a semisolid electrolyte layer according to the present invention comprises: a semisolid electrolyte comprising particles, and a semisolid electrolytic solution including a semisolid electrolyte solvent and a low-viscosity organic solvent; and a semisolid electrolyte binder, wherein the semisolid electrolytic solution is supported by the particles; and the ratio of the low-viscosity organic solvent is 10% by weight or more per 100% by weight of a mixed solvent of the semisolid electrolyte solvent and the low-viscosity organic solvent.

## Description

### Technical Field

The present invention relates to a semisolid electrolyte layer, a battery cell sheet and a secondary battery.

### Background Art

With regard to electrolytes for secondary batteries, a method is known in which an ionic liquid is mixed with inorganic fine particles to thicken the liquid or turn the liquid into a gel. As a technique regarding a gelled electrolyte, Patent Literature 1 discloses an electrolyte including a trialkylimidazolium salt (A) typified by 1-butyl-2,3-dimethylimidazolium bis(trifluoromethanesulfonyl)imide, inorganic fine particles (B) typified by fine particles of silica, and a support electrolyte salt (C) typified by LiPF₆, or an electrolyte further containing in the above-described electrolyte an organic electrolytic solution (D) typified by propylene carbonate.

### Citation List

### Patent Literature

Patent Literature 1
JP Patent Publication (Kokai) No. 2007-280948 A

### Summary of Invention

### Technical Problem

In the electrolyte of Patent Literature 1, a highly volatile organic electrolytic solution may be volatilized while being mixed with inorganic fine particles, resulting in reduction of the electrical conductivity of the electrolyte. An object of the present invention is to improve the electrical conductivity of an electrolyte (semisolid electrolyte layer).

### Solution to Problem

An example of the feature of the present invention for solving the problem described above is as follows.

A semisolid electrolyte layer comprising: a semisolid electrolyte comprising particles, and a semisolid electrolytic solution including a semisolid electrolyte solvent and a low-viscosity organic solvent; and a semisolid electrolyte binder. The semisolid electrolytic solution is supported by the particles. The ratio of the low-viscosity organic solvent is 10% by weight or more per 100% by weight of a mixed solvent of the semisolid electrolyte solvent and the low-viscosity organic solvent.

The disclosure of JP Patent No. 2017-064155, which the present application claims priority based on, is incorporated herein.

### Advantageous Effects of Invention

According to the present invention, the electrical conductivity of a semisolid electrolyte layer can be improved. Problems, constitutions and effects other than those described above will be made apparent by the embodiment described below.

### Brief Description of Drawings

[Figure 1] Figure 1 is a sectional view of a secondary battery according to one embodiment of the present invention.
[Figure 2] Figure 2 is a diagram showing dependency of the ionic conductivity on the mixing ratio of a low-viscosity organic solvent.
[Figure 3] Figure 3 is a relationship diagram between the concentration of an electrolyte salt and the product of the ionic conductivity of a semisolid electrolyte layer and the viscosity of a mixed solvent.
[Figure 4] Figure 4 is a relationship diagram between the reciprocal of the viscosity of a mixed solvent and the concentration of an electrolyte salt contained in the mixed solvent.
[Figure 5] Figure 5 is a relationship diagram between the concentration of an electrolyte salt contained in a mixed solvent and the ionic conductivity of a semisolid electrolyte layer.
[Figure 6] Figure 6 is a diagram showing the cycle characteristics of lithium ion secondary batteries in Examples and Comparative Example.
[Figure 7] Figure 7 is a table showing the results of Examples and Comparative Example.
[Figure 8] Figure 8 is a table showing the results of Examples and Comparative Example.

### Description of Embodiment

Hereinafter, an embodiment of the present invention will be described with reference to the drawings etc. The following descriptions show specific examples of the subject matters of the present invention, and the present invention is not limited to these descriptions. Those skilled in the art can make various changes and modifications within the scope of the technical idea disclosed herein. Further, throughout the drawings for illustrating the present invention, elements with like functions are given like symbols, and repetitive descriptions thereof may be omitted.

The present invention will be described herein with a lithium ion secondary battery taken as an example of a secondary battery. The lithium ion secondary battery is an electrochemical device in which lithium ions are absorbed to or desorbed from an electrode in a nonaqueous electrolyte, whereby electric energy can be stored or used. This battery is alternatively called a lithium ion battery, a nonaqueous electrolyte secondary battery or a nonaqueous electrolytic solution secondary battery, which is also a subject of the present invention. The technical idea of the present invention can be applied to sodium ion secondary batteries, magnesium ion secondary batteries, aluminum ion secondary batteries and the like in addition to lithium ion secondary batteries.

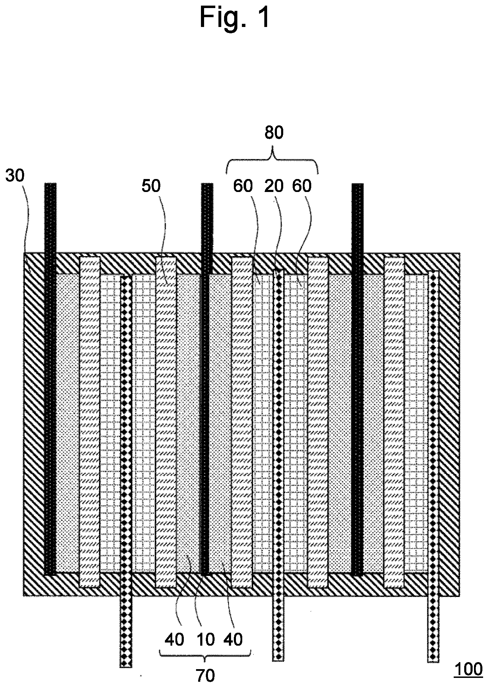

Figure 1 is a sectional view of a secondary battery according to one embodiment of the present invention. As shown in Figure 1, a secondary battery 100 includes a positive electrode 70, a negative electrode 80, a battery case 30 and a semisolid electrolyte layer 50. The battery case 30 stores the semisolid electrolyte layer 50, the positive electrode 70 and the negative electrode 80. A material of the battery case 30 can be selected from materials having corrosion resistance to a nonaqueous electrolyte, such as aluminum, stainless steel and nickel-plated steel. Figure 1 shows a layered secondary battery, but the technical idea of the present invention can also be applied to wound and rectangular secondary batteries.

An electrode body including the positive electrode 70, the semisolid electrolyte layer 50 and the negative electrode 80 are laminated in the secondary battery 100. The positive electrode 70 includes a positive electrode current collector 10 and a positive electrode mixture layer 40. The positive electrode mixture layer 40 is formed on both sides of the positive electrode current collector 10. The negative electrode 80 includes a negative current collector 20 and a negative electrode mixture layer 60. The negative electrode mixture layer 60 is formed on both sides of the negative electrode current collector 20. The positive electrode current collector 10 and the negative electrode current collector 20 protrude outward from the battery case 30, and by bonding a plurality of protruding positive electrode current collectors 10 together and bonding a plurality of protruding negative electrode current collectors 20 together by, for example, ultrasonic bonding, parallel connection is established in the secondary battery 100. The positive electrode 70 or negative electrode 80, the positive electrode mixture layer 40 or negative electrode mixture layer 60 and the positive electrode current collector 10 or negative electrode current collector 20 may be referred to as an electrode, an electrode mixture layer and an electrode current collector, respectively. An integrated structure of the semisolid electrolyte layer 50 and the positive electrode 70 or the negative electrode 80 may be referred to as a battery cell sheet.

The positive electrode mixture layer includes a positive electrode active material, a positive electrode conducting agent intended to improve the electrical conductivity of the positive electrode mixture layer, and a positive electrode binder for binding these components. The negative electrode mixture layer includes a negative electrode active material, a negative electrode conducting agent intended to improve the electrical conductivity of the negative electrode mixture layer, and a negative electrode binder for binding these components. The semisolid electrolyte layer includes a semisolid electrolyte binder and a semisolid electrolyte. The semisolid electrolyte includes particles and a semisolid electrolytic solution. The positive electrode active material or negative electrode active material, the positive electrode conducting agent or negative electrode conducting agent, the positive electrode binder or negative electrode binder may be referred to as an electrode active material, an electrode conducting agent and an electrode binder, respectively.

The semisolid electrolyte is a material obtained by mixing particles of SiO₂ or the like with a semisolid electrolytic solution including a mixed solvent of a low-viscosity organic solvent and a semisolid electrolyte solvent obtained by dissolving an electrolyte salt such as a lithium salt in an ether-based solvent or an ionic liquid. The characteristic of the semisolid electrolyte is that leakage of an electrolytic solution hardly occurs because there is no flowable electrolytic solution. The semisolid electrolyte layer 50 not only serves as a medium for transferring lithium ions between the positive electrode 70 and the negative electrode 80, but also acts as an electron insulating material to prevent a short-circuit between the positive electrode 70 and the negative electrode 80.

When a semisolid electrolyte is packed in pores of an electrode mixture layer, the semisolid electrolyte may be added to the electrode mixture layer, and absorbed by the pores of the electrode mixture layer to hold the semisolid electrolyte. Here, the semisolid electrolytic solution can be held by particles of an electrode active material or an electrode conducting agent in the electrode mixture layer without requiring particles contained in the semisolid electrolyte layer. Another method for packing a semisolid electrolyte in pores of an electrode mixture layer is, for example, a method in which a semisolid electrolyte, an electrode active material and an electrode binder are mixed to prepare slurry and the slurry is also applied onto an electrode current collector.

### <Electrode conducting agent>

Examples of the electrode conducting agent that is suitably used include, but are not limited to, Ketjen black and acetylene black.

### <Electrode binder>

Examples of the electrode binder include, but are not limited to, styrene-butadiene rubber, carboxymethylcellulose, polyvinylidene fluoride (PVDF) and mixtures thereof.

### <Positive electrode active material>

In the positive electrode active material, lithium ions are desorbed in a charge process, and lithium ions desorbed from a negative electrode active material in a negative electrode mixture layer are inserted in a discharge process. The material for the positive electrode active material is preferably a lithium composite oxide containing a transition metal, and specific examples thereof include, but are not limited to, LiCoO₂, LiNiO₂, LiMn₂O₄, LiMnO₃, LiMn₂O₃, LiMnO₂, Li₄Mn₅O₁₂, LiMn₂₋ₓMₓO₂ (where M is Co, Ni, Fe, Cr, Zn or Ta, and x is 0.01 to 0.2), Li₂Mn₃MO₈ (where M is Fe, Co, Ni, Cu or Zn), Li₁₋ₓAₓMn₂O₄ (where A is Mg, B, Al, Fe, Co, Ni, Cr, Zn or Ca, and x is 0.01 to 0.1), LiNi₁₋ₓMₓO₂ (where M is Co, Fe or Ga, and x is 0.01 to 0.2), LiFeO₂, Fe₂(SO₄)₃, LiCo₁₋ₓMₓO₂ (where M is Ni, Fe or Mn, and x is 0.01 to 0.2), LiNi₁₋ₓMₓO₂ (where M is Mn, Fe, Co, Al, Ga, Ca or Mg, and x is 0.01 to 0.2), Fe(MoO₄)₃, FeF₃, LiFePO₄ and LiMnPO₄.

### <Positive electrode current collector 10>

For the positive electrode current collector 10, an aluminum foil having a thickness of 10 to 100 µm, an aluminum perforated foil having a thickness of 10 to 100 µm and having pores with a pore diameter of 0.1 to 10 mm, an expand metal, a foamed metal plate or the like is used, and as a material for the positive electrode current collector 10, not only aluminum but also stainless steel, titanium or the like is applicable. Without being limited by a material, a shape, a production method or the like, any material can be used for the positive electrode current collector 10 as long as it does not undergo a change such as dissolution or oxidation during use of a secondary battery.

### <Positive electrode 70>

Positive electrode slurry obtained by mixing a positive electrode active material, a positive electrode conducting agent, a positive electrode binder and an organic solvent is deposited on the positive electrode current collector 10 by a doctor blade method, a dipping method, a spraying method or the like, and then dried to remove the organic solvent, and pressure molding is performed by roll press to prepare the positive electrode 70. It is also possible to laminate a plurality of positive electrode mixture layers 40 to the positive electrode current collector 10 by applying and drying the slurry two or more times. It is desirable that the thickness of the positive electrode mixture layer 40 be equal to or greater than the average particle diameter of the positive electrode active material. This is because when the thickness of the positive electrode mixture layer 40 is less than the average particle diameter of the positive electrode active material, electron conductivity between adjacent positive electrode active materials deteriorates.

### <Negative electrode active material>

In the negative electrode active material, lithium ions are desorbed in a discharge process, and lithium ions desorbed from a positive electrode active material in the positive electrode mixture layer 40 are inserted in a charge process. Examples of the negative electrode active material that can be used include, but are not limited to, carbon-based materials (e.g. graphite, graphitizable carbon materials and amorphous carbon materials), electrically conductive polymer materials (e.g. polyacene, polyparaphenylene, polyaniline and polyacetylene), lithium composite oxides (e.g. lithium titanate: Li₄Ti₅O₁₂), metallic lithium, and metals that form an alloy with lithium (e.g. aluminum, silicon and tin).

### <Negative electrode current collector 20>

For the negative electrode current collector 20, a copper foil having a thickness of 10 to 100 µm, a copper perforated foil having a thickness of 10 to 100 µm and a pore diameter of 0.1 to 10 mm, an expand metal, a foamed metal plate or the like is used. Not only copper but also stainless steel, titanium, nickel or the like is applicable. Without being limited by a material, a shape, a production method or the like, any material can be used for the negative electrode current collector 20.

### <Negative electrode 80>

Negative electrode slurry obtained by mixing a negative electrode active material, a negative electrode conducting agent, and an organic solvent containing a very small amount of water is deposited on the negative electrode current collector 20 by a doctor blade method, a dipping method, a spraying method or the like, and then dried to remove the organic solvent, and pressure molding is performed by roll press to prepare the negative electrode. It is also possible to laminate a plurality of negative electrode mixture layers 60 to the negative electrode current collector 20 by applying and drying the slurry two or more times. It is desirable that the thickness of the negative electrode mixture layer 60 be equal to or greater than the average particle diameter of the negative electrode active material. This is because when the thickness of the negative electrode mixture layer 60 is less than the average particle diameter of the negative electrode active material, electron conductivity between adjacent negative electrode active materials deteriorates.

### <Particles>

From the viewpoint of electrochemical stability, the particles are preferably particles which have insulation quality, and are insoluble in a semisolid electrolytic solution containing an ether-based solvent or an ionic liquid. For example, silica (SiO₂) particles, γ-alumina (Al₂O₃) particles, ceria (CeO₂) particles and zirconia (ZrO₂) particles can be preferably used. Other known metal oxide particles may be used.

Since the amount of the semisolid electrolytic solution held is considered to be proportional to the specific surface area of the particles, the average particle diameter of primary particles in the particles is preferably 1 nm or more and 10 µm or less. When the average particle diameter is more than 10 µm, it may be difficult to form a semisolid electrolyte because the particles cannot appropriately hold a sufficient amount of the semisolid electrolytic solution. Further, when the average particle diameter is less than 1 nm, it may be difficult to form a semisolid electrolyte because interfacial force between particles increases, so that the particles are easily aggregated. The average particle diameter of primary particles in the particles is more preferably 1 nm or more and 50 nm or less, still more preferably 1 nm or more and 10 nm or less. The average particle diameter can be measured using, for example, a known particle diameter distribution measuring apparatus utilizing a laser scattering method.

### <Semisolid electrolytic solution>

The semisolid electrolytic solution contains a semisolid electrolyte solvent, a low-viscosity organic solvent and any negative electrode interface stabilizing material. The semisolid electrolyte solvent contains a mixture of an electrolyte salt and an ionic liquid, or an ether-based solvent having properties similar to those of an ionic liquid. The electrolyte salt may be contained in the low-viscosity organic solvent rather than the semisolid electrolyte solvent. The electrolyte salt may be contained in both the semisolid electrolyte solvent and the low-viscosity organic solvent. The ionic liquid is a compound which is dissociated into cations and anions at normal temperature, and held in a liquid state. The ionic liquid may be referred to as an ionic liquid, a low-melting-point salt, a salt that is melted at normal temperature. From the viewpoint of stability in the air and heat resistance in a secondary battery, it is desirable that the semisolid electrolyte solvent have low volatility, specifically a vapor pressure of 150 Pa or less at room temperature.

The ionic liquid includes cations and anions. The ionic liquid is classified into imidazolium-based ionic liquids, ammonium-based ionic liquids, pyrrolidinium-based ionic liquids, piperidinium-based ionic liquids, pyridinium-based ionic liquids, morpholinium-based ionic liquids, phosphonium-based ionic liquids, sulfonium-based ionic liquids and the like depending on the cation species. Examples of cations that form the imidazolium-based ionic liquid include alkylimidazolium cations such as 1-ethyl-3-methylimidazolium and 1-butyl-3-methylimidazolium (BMI). Examples of cations that form the ammonium-based ionic liquid include alkylammonium cations such as N,N-diethyl-N-methyl-N-(2-methoxyethyl)ammonium (DEME), tetraamylammonium and N,N,N-trimethyl-N-propylammonium. Examples of cations that form the pyrrolidinium-based ionic liquids include alkylpyrrolidinium cations such as N-methyl-N-propylpyrrolidinium (Py13) and 1-butyl-1-methylpyrrolidinium. Examples of cations that form the piperidinium-based ionic liquids include alkylpiperidinium cations such as N-methyl-N-propylpiperidinium (PP13) and 1-butyl-1-methylpiperidinium. Examples of cations that form the pyridinium-based ionic liquid include alkylpyridinium cations such as 1-butylpyridinium and 1-butyl-4-methylpyridinium. Examples of cations that form the morpholinium-based ionic liquid include alkylmorpholiniums such as 4-ethyl-4-methylmorpholinium. Examples of cations that form the phosphonium-based ionic liquid include alkylphosphonium cations such as tetrabutylphosphonium and tributylmethylphosphonium. Examples of cations that form the sulfonium-based ionic liquid include alkylsulfonium cations such as trimethylsulfonium and tributylsulfonium. Examples of anions as counter ions of these cations include bis(trifluoromethanesulfonyl)imide (TFSI), bis(fluorosulfonyl)imide, tetrafluoroborate (BF₄), hexafluorophosphate (PF₆), bis(pentafluoroethanesulfonyl)imide (BETI), trifluoromethanesulfonate (triflate), acetate, dimethylphosphate, dicyanamide and trifluoro(trifluoromethyl)borate. These ionic liquids may be used singly or in combination of two or more thereof.

As an electrolyte salt to be used with the ionic liquid, an electrolyte salt which can be coordinated to anions of the ionic liquid to dissolve the electrolyte salt can be used. A salt formed by lithium as a cation and an anion as described above can be used as a lithium salt, and examples thereof include, but are not limited to, lithium bis(fluorosulfonyl)imide (LiFSI), lithium bis(trifluoromethanesulfonyl)imide (LiTFSI), lithium bis(pentafluoroethanesulfonyl)imide (LiBETI), lithium tetrafluoroborate (LiBF₄), lithium hexafluorophosphate (LiPF₆) and lithium triflate. These electrolyte salts may be used singly or in combination of two or more thereof.

The ether-based solvent forms a solvate ionic liquid with an electrolyte salt. Examples of the solvate ionic liquid include lithium glyme complexes. As the ether-based solvent, known glyme (general term for symmetric glycol diether represented by R-O(CH₂CH₂O)ₙ-R' (each of R and R' is a saturated hydrocarbon, and n is an integer) having properties similar to those of an ionic liquid can be used. From the viewpoint of ionic conductivity (electrical conductivity), tetraglyme (tetraethylenedimethyl glycol G4), triglyme (triethylene glycol dimethyl ether G3), pentaglyme (pentaethylene glycol dimethyl ether G5) and hexaglyme (hexaethylene glycol dimethyl ether, G6) can be preferably used. Further, as the ether-based solvent, crown ether (general term for macrocyclic ether represented by (-CH₂-CH₂-O)ₙ (n is an integer)) can be used. Specific examples of the crown ether that can be preferably used include, but are not limited to, 12-crown-4, 15-crown-5, 18-crown-6 and dibenzo-18-crown-6. Examples of the electrolyte salt that can be used include, but are not limited to, imide salts such as LiFSI, LiTFSI and LiBETI. Mixtures of an ether-based solvent and an electrolyte salt may be used singly or in combination of two or more thereof. An electrolyte salt as described above may be added to the ether-based solvent.

<Low-viscosity organic solvent>

The low-viscosity organic solvent reduces the viscosity of a semisolid electrolyte solvent to improve the ionic conductivity. A semisolid electrolytic solution containing a semisolid electrolyte solvent has high internal resistance, and the internal resistance of the semisolid electrolytic solution can be reduced by adding a low-viscosity organic solvent to increase the ionic conductivity of the semisolid electrolyte solvent. However, since the semisolid electrolyte solvent is electrochemically unstable, there is the possibility that decomposition reaction is accelerated by battery operation, and repeated operations of a secondary battery cause an increase in resistance and a decrease in capacity of the secondary battery. Further, in a lithium ion secondary battery using graphite as a negative electrode active material, there is the possibility that during the charging reaction, cations of a semisolid electrolyte solvent are inserted into graphite, and thus the graphite structure is collapsed, so that repeated operations can no longer be performed.

It is desirable that the low-viscosity organic solvent be a solvent having a viscosity smaller than 140 Pa·s, a viscosity of, for example, a mixture of an ether-based solvent and an electrolyte salt at 25°C. Examples of the low-viscosity organic solvent include propylene carbonate (PC), trimethyl phosphate (TMP), gamma-butyrolactone (GBL), ethylene carbonate (EC), triethyl phosphate (TEP), tris(2,2,2-trifluoroethyl) phosphite (TFP) and dimethyl methylphosphonate (DMMP). These low-viscosity organic solvents may be used singly or in combination of two or more thereof. An electrolyte salt as described above may be dissolved in the low-viscosity organic solvent.

### <Negative electrode interface stabilizing material>

The negative electrode interface stabilizing material improves the cycle characteristics of a battery by preventing co-insertion and reductive decomposition of an ether-based solvent and resulting collapse of the graphite structure when graphite is used as a negative electrode active material. Examples of the negative electrode interface stabilizing material include vinylene carbonate (VC), lithium bis-oxalate borate (LiBOB) and fluoroethylene carbonate (FEC). These negative electrode interface stabilizing materials may be used singly or in combination of two or more thereof.

### <Semisolid electrolyte binder>

For the semisolid electrolyte binder, a fluorine-based resin is suitably used. As the fluorine-based resin, polytetrafluoroethylene (PTFE), polyvinylidene fluoride (PVDF), PVdF-HFP which is a copolymer of vinylidene fluoride (VDF) and hexafluoropropylene (HFP), and the like are suitably used. By using these resins, adhesion between the semisolid electrolyte layer 50 and the electrode current collector is enhanced, resulting in improvement of battery performance.

### <Semisolid electrolyte>

A semisolid electrolytic solution is supported (held) by particles to form a semisolid electrolyte. Examples of the method for preparing a semisolid electrolyte include a method in which a semisolid electrolytic solution and particles are mixed at a specific volume ratio, an organic solvent such as methanol is added, the resulting mixture is mixed to prepare semisolid electrolyte slurry, the slurry is then spread over a dish, and the organic solvent is distilled off to obtain semisolid electrolyte powder. Here, with consideration given to the fact that a low-viscosity organic solvent contained in the semisolid electrolytic solution is easily volatilized, control is performed so as to meet a final target mixing ratio.

### <Semisolid electrolyte layer 50>

Examples of the method for preparing the semisolid electrolyte layer 50 include a method in which semisolid electrolyte powder is compressed and molded into pellets using a molding die etc.; and a method in which a semisolid electrolyte binder is added to and mixed with semisolid electrolyte powder, and the resulting mixture is formed into a sheet. Electrolyte binder powder is added to and mixed with a semisolid electrolyte to prepare the semisolid electrolyte layer 50 (semisolid electrolyte sheet) having high flexibility. Alternatively, a binding agent solution obtained by dissolving a semisolid electrolyte binder in a dispersion solvent is added to and mixed with a semisolid electrolyte, and the dispersion solvent is distilled off to prepare the semisolid electrolyte layer 50. A product with a binding agent solution added to and mixed with a semisolid electrolyte as described above may be applied onto an electrode, and dried to prepare the semisolid electrolyte layer 50.

### Examples

Hereinafter, the present invention will be described in further detail by way of Examples, but the present invention is not limited to these Examples.

### (Example 1)

### <Preparation of semisolid electrolyte>

Tetraglyme (G4) and lithium bis(trifluoromethanesulfonyl)imide (LiTFSI) were weighed, added in a beaker, and mixed to a homogeneous solvent to prepare a lithium glyme complex (semisolid electrolyte solvent). Next, a lithium glyme complex and propylene carbonate (PC) as a low-viscosity organic solvent were mixed to obtain a mixed solvent. The mixed solvent and fumed silica nanoparticles having a particle diameter of 7 nm were weighed at a volume ratio of 80 : 20. Further, methanol and the mixed solvent were added in a beaker together with a stirring bar, and stirred at 600 rpm with a stirrer to obtain a homogeneous mixture. The mixture was added in an eggplant flask, and dried at 100 mbar and 60°C for 3 hours using an evaporator. The dried powder was put through a sieve of 100 µm mesh to obtain a powdered semisolid electrolyte.

The viscosity of the mixed solvent was measured by a vibration-type viscometer (VISCOMATE VM-100A) manufactured by SEKONIC CORPORATION.

### <Preparation of semisolid electrolyte layer 50>

A semisolid electrolyte and polytetrafluoroethylene (PTFE) as a semisolid electrolyte binder were weighed at a weight ratio of 95 : 5, added in a mortar, and homogeneously mixed. The resulting mixture was set on a hydraulic press machine with a PTFE sheet interposed therebetween, and was pressed at 400 kgf/cm². Further, the mixture was rolled by a roll press machine to prepare a sheet-shaped semisolid electrolyte layer 50 having a thickness of 200 µm. This sheet was punched to a diameter of 16 mm, and provided for preparation of a lithium ion secondary battery as described below. The obtained semisolid electrolyte layer 50 contained a semisolid electrolytic solution in which the mixing molar ratio of LiTFSI and G4 was 1 : 1, and the mixing weight ratio of a lithium glyme complex and a low-viscosity organic solvent PC was 55.5 : 44.5.

### <Preparation of positive electrode 70>

LiNi_{0.33}Mn_{0.33}Co_{0.33}O₂ as a positive electrode active material, acetylene black as a positive electrode conducting agent, and a solution of PVDF in N-methylpyrrolidone as a positive electrode binder were weighed at a weight ratio of 84 : 7 : 9, and mixed to obtain positive electrode slurry. The slurry was applied onto a stainless foil as a positive electrode current collector 10, and dried at 80°C for 2 hours to remove N-methylpyrrolidone, thereby obtaining a positive electrode sheet. The positive electrode sheet was punched to a diameter of 13 mm, and uniaxially pressed to obtain a positive electrode 70 having a double sided coating weight of 36 mg/cm² and a density of 2.6 g/cm³.

### <Preparation of negative electrode 80>

Graphite was used as a negative electrode active material. A negative electrode conducting agent and a negative electrode binder were the same as, respectively, the positive electrode conducting agent and the positive electrode binder in the positive electrode 70. The negative electrode active material, the negative electrode conducting agent and a solution of the negative electrode binder in N-methylpyrrolidone were weighed at a weight ratio of 88 : 2 : 10, and mixed to obtain negative electrode slurry. The slurry was applied onto a stainless foil as a negative electrode current collector 20, and dried at 80°C for 2 hours to remove N-methylpyrrolidone, thereby obtaining a negative electrode sheet. The negative electrode sheet was punched to a diameter of 13 mm, and uniaxially pressed to obtain a negative electrode 80 having a double sided coating weight of 15 mg/cm² and a density of 1.5 g/cm³.

### <Preparation of lithium ion secondary battery>

The positive electrode 70, the negative electrode 80, and the sheet-shaped semisolid electrolyte layer 50 prepared in this Example were laminated, and encapsulated in a 2032-type coin cell to obtain a lithium ion secondary battery. The battery was operated in a constant current-constant low voltage mode for charge and in a constant current mode for discharge, and repetitive characteristics (initial discharge capacity (mAh/g), discharge capacity after 10 times of charge-discharge (mAh/g), capacity retention ratio (%) = discharge capacity (10 times)/discharge capacity (initial time)) were evaluated. The battery measurements were made at 25°C.

### <Calculation of ionic conductivity>

A symmetric cell with a stainless plate as an electrode was prepared, and an impedance was measured at a voltage amplitude of 10 mV and in a measurement frequency range of 1 M to 0.1 Hz. A point at which the plotted impedance crosses the X axis at a high frequency was evaluated as an electrolytic resistance, and the ionic conductivity (mS/cm) of the semisolid electrolyte layer 50 was calculated.

### (Example 2)

A semisolid electrolyte layer 50 and a lithium ion secondary battery were prepared in the same manner as in Example 1 except that in a semisolid electrolytic solution, vinylene carbonate (VC) as a negative electrode interface stabilizing material was mixed in an amount of 9.1 parts by weight per 100 parts by weight of the total of a semisolid electrolyte solvent and a low-viscosity organic solvent.

### (Example 3)

A semisolid electrolyte layer 50 and a lithium ion secondary battery were prepared in the same manner as in Example 2 except that as a low-viscosity organic solvent, trimethyl phosphate (TMP) was used in place of PC, and the mixing weight ratio of a lithium glyme complex and the low-viscosity organic solvent TMP was 53.8 : 46.2.

### (Example 4)

A semisolid electrolyte layer 50 and a lithium ion secondary battery were prepared in the same manner as in Example 2 except that as a low-viscosity organic solvent, triethyl phosphate (TEP) was used in place of PC, and the mixing weight ratio of a lithium glyme complex and the low-viscosity organic solvent TEP was 57.0 : 43.0.

### (Example 5)

A semisolid electrolyte layer 50 was prepared in the same manner as in Example 2 except that as a low-viscosity organic solvent, tris(2,2,2-trifluoroethyl) phosphite (TFP) was used in place of PC, and the mixing weight ratio of a lithium glyme complex and the low-viscosity organic solvent TFP was 47.0 : 53.0.

### (Example 6)

A semisolid electrolyte layer 50 and a lithium ion secondary battery were prepared in the same manner as in Example 2 except that in a semisolid electrolytic solution, lithium bis-oxalate borate (LiBOB) as a negative electrode interface stabilizing material was mixed in an amount of 1.0 part by weight per 100 parts by weight of the total of a semisolid electrolyte solvent and a low-viscosity organic solvent, and the mixing weight ratio of a lithium glyme complex and the low-viscosity organic solvent was 55.5 : 44.5.

### (Example 7)

A semisolid electrolyte layer 50 and a lithium ion secondary battery were prepared in the same manner as in Example 2 except that in a semisolid electrolytic solution, fluoroethylene carbonate (FEC) as a negative electrode interface stabilizing material was mixed in an amount of 9.1 parts by weight per 100 parts by weight of the total of a semisolid electrolyte solvent and a low-viscosity organic solvent, and the mixing weight ratio of a lithium glyme complex and the low-viscosity organic solvent was 55.5 : 44.5.

### (Example 8)

A semisolid electrolyte layer 50 was prepared in the same manner as in Example 2 except that the mixing weight ratio of a lithium glyme complex and a low-viscosity organic solvent was 22.8 : 77.2.

### (Example 9)

A semisolid electrolyte layer 50 was prepared in the same manner as in Example 2 except that the mixing weight ratio of a lithium glyme complex and a low-viscosity organic solvent was 44.1 : 55.9.

### (Example 10)

A semisolid electrolyte layer 50 was prepared in the same manner as in Example 2 except that the mixing weight ratio of a lithium glyme complex and a low-viscosity organic solvent was 64.0 : 36.0.

### (Example 11)

A semisolid electrolyte layer 50 was prepared in the same manner as in Example 2 except that the mixing weight ratio of a lithium glyme complex and a low-viscosity organic solvent was 73.4 : 26.6.

### (Example 12)

A semisolid electrolyte layer 50 was prepared in the same manner as in Example 2 except that the mixing weight ratio of a lithium glyme complex and a low-viscosity organic solvent was 82.6 : 17.4.

### (Example 13)

A semisolid electrolyte layer 50 was prepared in the same manner as in Example 3 except that the mixing weight ratio of a lithium glyme complex and a low-viscosity organic solvent was 22.5 : 77.5.

### (Example 14)

A semisolid electrolyte layer 50 was prepared in the same manner as in Example 3 except that the mixing weight ratio of a lithium glyme complex and a low-viscosity organic solvent was 43.7 : 56.3.

### (Example 15)

A semisolid electrolyte layer 50 was prepared in the same manner as in Example 3 except that the mixing weight ratio of a lithium glyme complex and a low-viscosity organic solvent was 63.6 : 36.4.

### (Example 16)

A semisolid electrolyte layer 50 was prepared in the same manner as in Example 3 except that the mixing weight ratio of a lithium glyme complex and a low-viscosity organic solvent was 73.1 : 26.9.

### (Example 17)

A semisolid electrolyte layer 50 was prepared in the same manner as in Example 3 except that the mixing weight ratio of a lithium glyme complex and a low-viscosity organic solvent was 82.3 : 17.7.

### (Example 18)

A semisolid electrolyte layer 50 was prepared in the same manner as in Example 3 except that as a low-viscosity organic solvent, gamma-butyrolactone (GBL) was used in place of TMP, and the mixing weight ratio of a lithium glyme complex and the low-viscosity organic solvent was 23.9 : 76.1.

### (Example 19)

A semisolid electrolyte layer 50 was prepared in the same manner as in Example 3 except that as a low-viscosity organic solvent, GBL was used in place of TMP, and the mixing weight ratio of a lithium glyme complex and the low-viscosity organic solvent was 45.6 : 54.4.

### (Example 20)

A semisolid electrolyte layer 50 was prepared in the same manner as in Example 3 except that as a low-viscosity organic solvent, GBL was used in place of TMP, and the mixing weight ratio of a lithium glyme complex and the low-viscosity organic solvent was 55.7 : 44.3.

### (Example 21)

A semisolid electrolyte layer 50 was prepared in the same manner as in Example 3 except that as a low-viscosity organic solvent, GBL was used in place of TMP, and the mixing weight ratio of a lithium glyme complex and the low-viscosity organic solvent was 65.3 : 34.7.

### (Example 22)

A semisolid electrolyte layer 50 was prepared in the same manner as in Example 3 except that as a low-viscosity organic solvent, GBL was used in place of TMP, and the mixing weight ratio of a lithium glyme complex and the low-viscosity organic solvent was 74.6 : 25.4.

### (Example 23)

A semisolid electrolyte layer 50 was prepared in the same manner as in Example 3 except that as a low-viscosity organic solvent, GBL was used in place of TMP, and the mixing weight ratio of a lithium glyme complex and the low-viscosity organic solvent was 83.4 : 16.6.

### (Example 24)

A semisolid electrolyte layer 50 was prepared in the same manner as in Example 3 except that as a low-viscosity organic solvent, ethylene carbonate (EC) was used in place of TMP, and the mixing weight ratio of a lithium glyme complex and the low-viscosity organic solvent was 21.2 : 78.8.

### (Example 25)

A semisolid electrolyte layer 50 was prepared in the same manner as in Example 3 except that as a low-viscosity organic solvent, EC was used in place of TMP, and the mixing weight ratio of a lithium glyme complex and the low-viscosity organic solvent was 41.8 : 58.2.

### (Example 26)

A semisolid electrolyte layer 50 was prepared in the same manner as in Example 3 except that as a low-viscosity organic solvent, EC was used in place of TMP, and the mixing weight ratio of a lithium glyme complex and the low-viscosity organic solvent was 51.8 : 48.2.

### (Example 27)

A semisolid electrolyte layer 50 was prepared in the same manner as in Example 3 except that as a low-viscosity organic solvent, EC was used in place of TMP, and the mixing weight ratio of a lithium glyme complex and the low-viscosity organic solvent was 61.7 : 38.3.

### (Example 28)

A semisolid electrolyte layer 50 was prepared in the same manner as in Example 3 except that as a low-viscosity organic solvent, EC was used in place of TMP, and the mixing weight ratio of a lithium glyme complex and the low-viscosity organic solvent was 71.5 : 28.5.

### (Example 29)

A semisolid electrolyte layer 50 was prepared in the same manner as in Example 3 except that as a low-viscosity organic solvent, EC was used in place of TMP, and the mixing weight ratio of a lithium glyme complex and the low-viscosity organic solvent was 81.1 : 18.9.

### (Example 30)

A semisolid electrolyte layer 50 was prepared in the same manner as in Example 3 except that as a low-viscosity organic solvent, triethyl phosphate (TEP) was used in place of TMP, and the mixing weight ratio of a lithium glyme complex and the low-viscosity organic solvent was 24.9 : 75.1.

### (Example 31)

A semisolid electrolyte layer 50 was prepared in the same manner as in Example 3 except that as a low-viscosity organic solvent, TEP was used in place of TMP, and the mixing weight ratio of a lithium glyme complex and the low-viscosity organic solvent was 46.9 : 53.1.

### (Example 32)

A semisolid electrolyte layer 50 was prepared in the same manner as in Example 3 except that as a low-viscosity organic solvent, TEP was used in place of TMP, and the mixing weight ratio of a lithium glyme complex and the low-viscosity organic solvent was 66.6 : 33.4.

### (Example 33)

A semisolid electrolyte layer 50 was prepared in the same manner as in Example 3 except that as a low-viscosity organic solvent, TEP was used in place of TMP, and the mixing weight ratio of a lithium glyme complex and the low-viscosity organic solvent was 75.6 : 24.4.

### (Example 34)

A semisolid electrolyte layer 50 was prepared in the same manner as in Example 3 except that as a low-viscosity organic solvent, TEP was used in place of TMP, and the mixing weight ratio of a lithium glyme complex and the low-viscosity organic solvent was 84.1 : 15.9.

### (Example 35)

A semisolid electrolyte layer 50 was prepared in the same manner as in Example 3 except that as a low-viscosity organic solvent, tris(2,2,2-trifluoroethyl) phosphite (TFP) was used in place of TMP, and the mixing weight ratio of a lithium glyme complex and the low-viscosity organic solvent was 18.2 : 81.8.

### (Example 36)

A semisolid electrolyte layer 50 was prepared in the same manner as in Example 3 except that as a low-viscosity organic solvent, TFP was used in place of TMP, and the mixing weight ratio of a lithium glyme complex and the low-viscosity organic solvent was 37.2 : 62.8.

### (Example 37)

A semisolid electrolyte layer 50 was prepared in the same manner as in Example 3 except that as a low-viscosity organic solvent, TFP was used in place of TMP, and the mixing weight ratio of a lithium glyme complex and the low-viscosity organic solvent was 57.1 : 42.9.

### (Example 38)

A semisolid electrolyte layer 50 was prepared in the same manner as in Example 3 except that as a low-viscosity organic solvent, TFP was used in place of TMP, and the mixing weight ratio of a lithium glyme complex and the low-viscosity organic solvent was 67.4 : 32.6.

### (Example 39)

A semisolid electrolyte layer 50 was prepared in the same manner as in Example 3 except that as a low-viscosity organic solvent, TFP was used in place of TMP, and the mixing weight ratio of a lithium glyme complex and the low-viscosity organic solvent was 78.0 : 22.0.

### (Example 40)

A semisolid electrolyte layer 50 was prepared in the same manner as in Example 3 except that as a low-viscosity organic solvent, dimethyl methylphosphonate (DMMP) was used in place of TMP, and the mixing weight ratio of a lithium glyme complex and the low-viscosity organic solvent was 23.4 : 76.6.

### (Example 41)

A semisolid electrolyte layer 50 was prepared in the same manner as in Example 3 except that as a low-viscosity organic solvent, DMMP was used in place of TMP, and the mixing weight ratio of a lithium glyme complex and the low-viscosity organic solvent was 44.9 : 55.1.

### (Example 42)

A semisolid electrolyte layer 50 was prepared in the same manner as in Example 3 except that as a low-viscosity organic solvent, DMMP was used in place of TMP, and the mixing weight ratio of a lithium glyme complex and the low-viscosity organic solvent was 55.0 : 45.0.

### (Example 43)

A semisolid electrolyte layer 50 was prepared in the same manner as in Example 3 except that as a low-viscosity organic solvent, DMMP was used in place of TMP, and the mixing weight ratio of a lithium glyme complex and the low-viscosity organic solvent was 64.7 : 35.3.

### (Example 44)

A semisolid electrolyte layer 50 was prepared in the same manner as in Example 3 except that as a low-viscosity organic solvent, DMMP was used in place of TMP, and the mixing weight ratio of a lithium glyme complex and the low-viscosity organic solvent was 74.1 : 25.9.

### (Example 45)

A semisolid electrolyte layer 50 was prepared in the same manner as in Example 3 except that as a low-viscosity organic solvent, DMMP was used in place of TMP, and the mixing weight ratio of a lithium glyme complex and the low-viscosity organic solvent was 83.0 : 17.0.

### (Example 46)

A semisolid electrolyte layer 50 was prepared in the same manner as in Example 3 except that as a low-viscosity organic solvent, propylene carbonate (PC) with lithium bis(trifluoromethanesulfonyl)imide (LiTFSI) dissolved at a concentration of 1 M was used in place of TMP, and the mixing weight ratio of a lithium glyme complex and the low-viscosity organic solvent was 19.3 : 80.7.

### (Example 47)

A semisolid electrolyte layer 50 was prepared in the same manner as in Example 3 except that as a low-viscosity organic solvent, PC with LiTFSI dissolved at a concentration of 1 M was used in place of TMP, and the mixing weight ratio of a lithium glyme complex and the low-viscosity organic solvent was 38.9 : 61.1.

### (Example 48)

A semisolid electrolyte layer 50 was prepared in the same manner as in Example 3 except that as a low-viscosity organic solvent, PC with LiTFSI dissolved at a concentration of 1 M was used in place of TMP, and the mixing weight ratio of a lithium glyme complex and the low-viscosity organic solvent was 48.8 : 51.2.

### (Example 49)

A semisolid electrolyte layer 50 was prepared in the same manner as in Example 3 except that as a low-viscosity organic solvent, PC with LiTFSI dissolved at a concentration of 1 M was used in place of TMP, and the mixing weight ratio of a lithium glyme complex and the low-viscosity organic solvent was 58.9 : 41.1.

### (Example 50)

A semisolid electrolyte layer 50 was prepared in the same manner as in Example 3 except that as a low-viscosity organic solvent, PC with LiTFSI dissolved at a concentration of 1 M was used in place of TMP, and the mixing weight ratio of a lithium glyme complex and the low-viscosity organic solvent was 69.0 : 31.0.

### (Example 51)

A semisolid electrolyte layer 50 was prepared in the same manner as in Example 3 except that as a low-viscosity organic solvent, PC with LiTFSI dissolved at a concentration of 1 M was used in place of TMP, and the mixing weight ratio of a lithium glyme complex and the low-viscosity organic solvent was 79.3 : 20.7.

### (Example 52)

A semisolid electrolyte layer 50 was prepared in the same manner as in Example 3 except that a mixture of tetraglyme (G4) and lithium bis(fluorosulfonyl)imide (LiFSI) at a molar ratio of 1 : 1 was used as a lithium glyme complex, propylene carbonate (PC) was used in place of TMP as a low-viscosity organic solvent, and the mixing weight ratio of the lithium glyme complex and the low-viscosity organic solvent was 21.6 : 78.4.

### (Example 53)

A semisolid electrolyte layer 50 was prepared in the same manner as in Example 3 except that a lithium glyme complex having G4 and LiFSI at a molar ratio of 1 : 1 was used, PC was used in place of TMP as a low-viscosity organic solvent, and the mixing weight ratio of the lithium glyme complex and the low-viscosity organic solvent was 42.3 : 57.7.

### (Example 54)

A semisolid electrolyte layer 50 was prepared in the same manner as in Example 53 except that the mixing weight ratio of a lithium glyme complex and a low-viscosity organic solvent was 52.4 : 47.6.

### (Example 55)

A semisolid electrolyte layer 50 was prepared in the same manner as in Example 53 except that the mixing weight ratio of a lithium glyme complex and a low-viscosity organic solvent was 62.3 : 37.7.

### (Example 56)

A semisolid electrolyte layer 50 was prepared in the same manner as in Example 53 except that the mixing weight ratio of a lithium glyme complex and a low-viscosity organic solvent was 72.0 : 28.0.

### (Example 57)

A semisolid electrolyte layer 50 was prepared in the same manner as in Example 53 except that the mixing weight ratio of a lithium glyme complex and a low-viscosity organic solvent was 81.5 : 18.5.

### (Example 58)

Lithium bis(trifluoromethanesulfonyl)imide (LiTFSI) as an electrolyte salt was dissolved at a concentration of 1 M in an ionic liquid (BMI-TFSI) including 1-butyl-3-methylimidazolium (BMI) as cations and bis(trifluoromethanesulfonyl)imide (TFSI) as anions, and the thus obtained solution was used as a semisolid electrolyte solvent. Further, propylene carbonate (PC) was used as a low-viscosity organic solvent, and vinylene carbonate (VC) was used as a negative electrode interface stabilizing material. In the same manner as in Example 1 except for the above, a sheet-shaped semisolid electrolyte layer 50 was prepared. In the semisolid electrolyte, the mixing weight ratio of the semisolid electrolyte solvent and the low-viscosity organic solvent was 60.0 : 40.0, and the amount of the negative electrode interface stabilizing material was 9.1 parts by weight per 100 parts by weight of the total of the semisolid electrolyte solvent and the low-viscosity organic solvent. The semisolid electrolyte layer was laminated to the positive electrode 70 and the negative electrode 80 shown in Example 1, and the resulting laminate was encapsulated in a 2032-type coin cell to obtain a lithium ion secondary battery.

### (Example 59)

A lithium ion secondary battery was prepared in the same manner as in Example 58 except that an ionic liquid (DEME-TFSI) including N,N-diethyl-N-methyl-N-(2-methoxyethyl)ammonium (DEME) as cations and bis(trifluoromethanesulfonyl)imide (TFSI) as anions was used as an ionic liquid.

### (Example 60)

A lithium ion secondary battery was prepared in the same manner as in Example 58 except that an ionic liquid (Py13-TFSI) including N-methyl-N-propylpyrrolidinium (Py13) as cations and TFSI as anions was used as an ionic liquid.

### (Example 61)

A lithium ion secondary battery was prepared in the same manner as in Example 58 except that an ionic liquid (PP13-TFSI) including N-methyl-N-propylpiperidinium (PP13) as cations and TFSI as anions was used as an ionic liquid.

### (Comparative Example 1)

### <Preparation of semisolid electrolyte>

A lithium glyme complex and a powdered semisolid electrolyte were prepared by the same method as in Example 1.

### <Preparation of semisolid electrolyte layer 50>

A semisolid electrolyte and PTFE were weighed at a weight ratio of 95 : 5, mixed, and rolled to obtain a sheet-shaped semisolid electrolyte layer 50 having a thickness of 250 µm to 450 µm. The obtained semisolid electrolyte layer 50 contained a semisolid electrolytic solution in which the mixing molar ratio of LiTFSI and G4 was 1 : 1, and the mixing weight ratio of a lithium glyme complex and a low-viscosity organic solvent PC was 96.1 : 3.9. Further, a lithium ion secondary battery was prepared in the same manner as in Example 1.

### <Results and discussions>

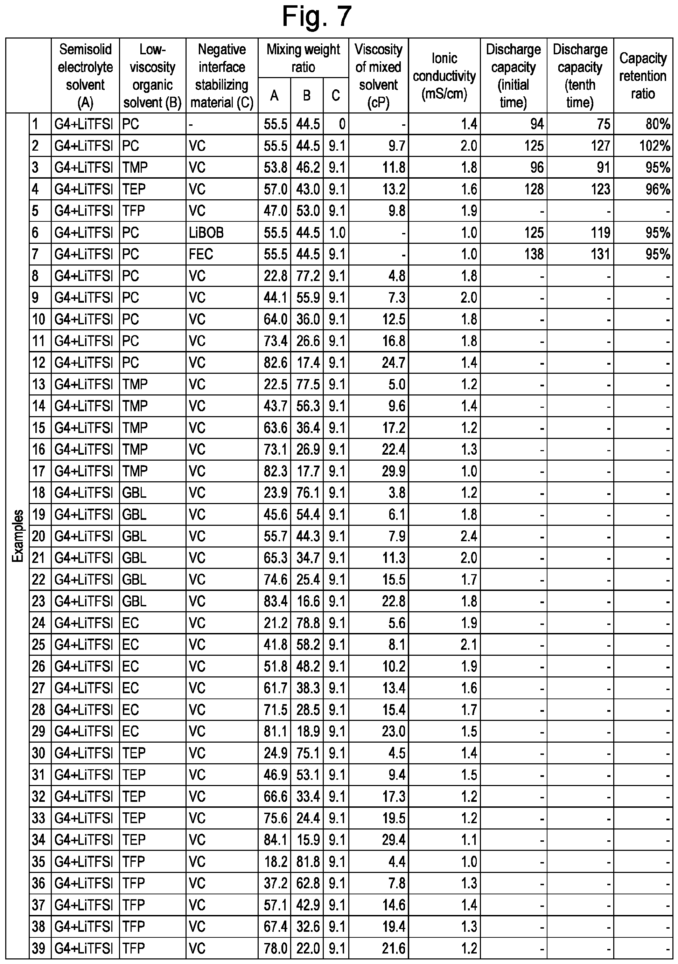

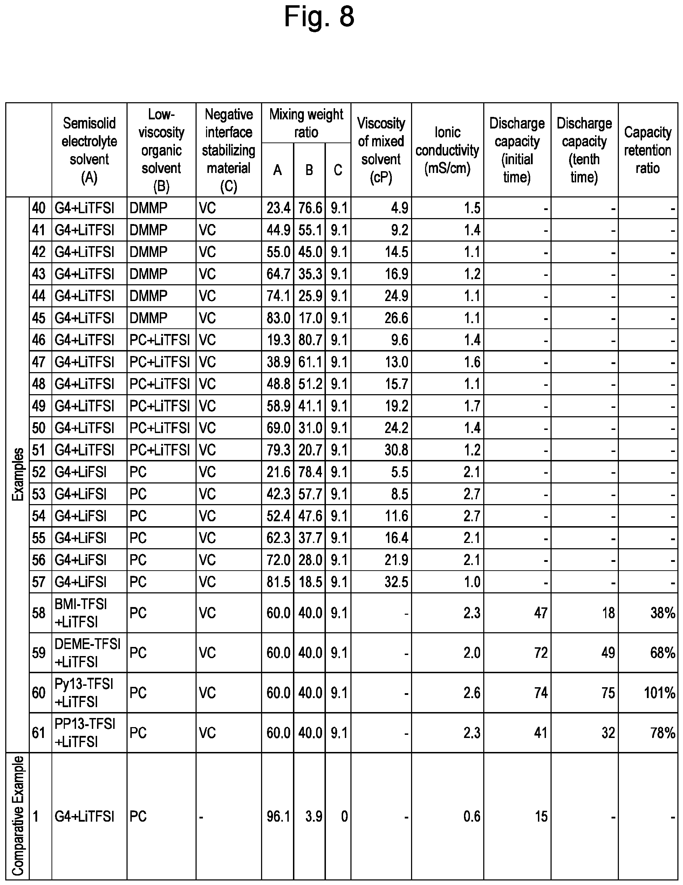

The results of Examples and Comparative Example are shown in Figures 7 and 8. The semisolid electrolyte layer 50 prepared in Comparative Example 1 had an ionic conductivity of 0.9 mS/cm or less. On the other hand, the semisolid electrolyte layers 50 prepared in Examples 1 to 5 had an ionic conductivity of 1.4 mS/c or more.

The relationship between the composition of the mixed solvent and the ionic conductivity of the semisolid electrolyte layer 50 which is shown in Figures 7 and 8 reveals that all of the semisolid electrolyte layers 50 of Examples 1 to 61 had an ionic conductivity of 1 mS/cm or more which enables operation of a lithium ion secondary battery. Further, in some of Examples, an ionic conductivity of 1.5 mS/cm or more, or even 2 mS/cm or more, which enables preparation of a battery having higher input/output characteristics, was exhibited.

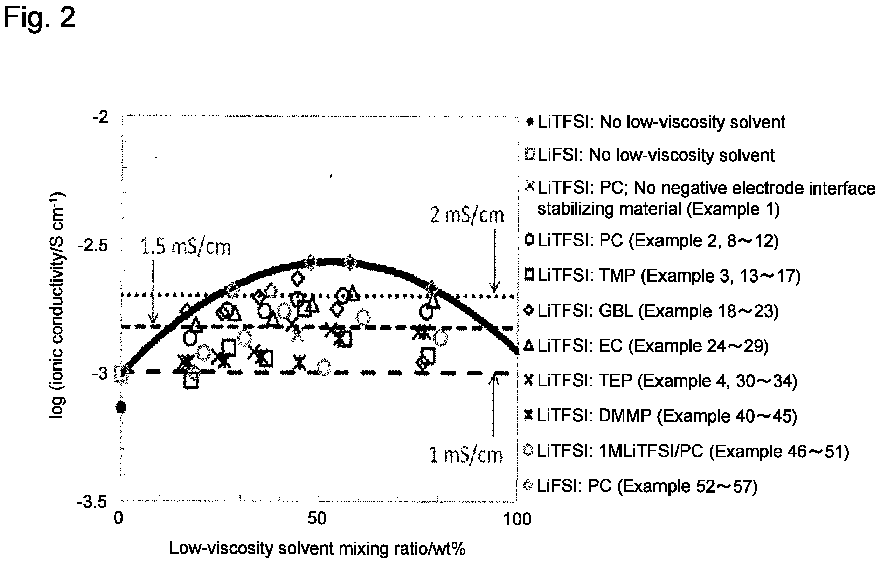

Figure 2 shows dependency of the ionic conductivity of the semisolid electrolyte layer 50 on the mixing ratio of a low-viscosity organic solvent. The semisolid electrolyte layer 50 containing a low-viscosity organic solvent was shown to have an ionic conductivity of 1 mS/cm or more over the entire range in which the mixing ratio of the low-viscosity organic solvent is 10% by weight or more. Further, it was revealed that an ionic conductivity of 1.5 mS/cm was achieved when the mixing ratio of the low-viscosity organic solvent was 13% by weight or more and 93% by weight or less, and an ionic conductivity of 2 mS/cm was achieved when the mixing ratio of the low-viscosity organic solvent was 25% by weight or more and 81% by weight or less. When the mixing ratio of the low-viscosity organic solvent is in the vicinity of the lower limit, addition of a larger amount of the low-viscosity organic solvent improves the ionic conductivity because the viscosity decreases to facilitate movement of ions. Further, when the mixing ratio of the low-viscosity organic solvent is in the vicinity of the upper limit, addition of a smaller amount of the low-viscosity organic solvent improves the ionic conductivity because the lithium salt concentration becomes relatively high, leading to an increase in lithium ion concentration.

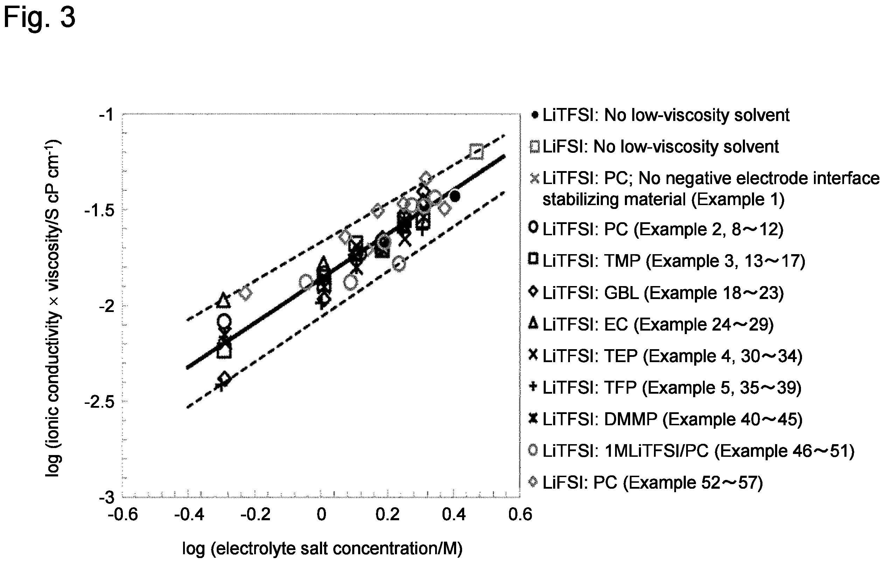

Figure 3 is a relationship diagram between the concentration of an electrolyte salt and the product of the ionic conductivity of a semisolid electrolyte layer and the viscosity of a mixed solvent. In Figure 3, the product of the ionic conductivity of the semisolid electrolyte layer 50 and the viscosity of the mixed solvent is plotted against the concentration of the electrolyte salt contained in the mixed solvent. Irrespective of the composition of the low-viscosity organic solvent, the plotted products of the ionic conductivity of the semisolid electrolyte layer 50 and the viscosity of the mixed solvent are distributed within a region defined by two broken lines with respect to the concentration of the electrolyte salt, and there is a linear relationship. The solid line represents experimental values linearly approximated by a least-square method.

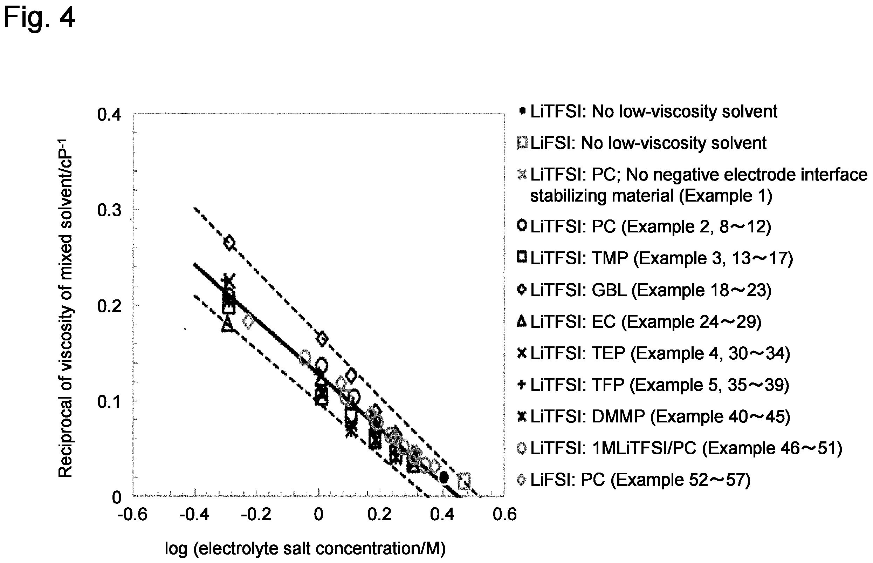

Figure 4 is a relationship diagram between the reciprocal of the viscosity of a mixed solvent and the concentration of an electrolyte salt contained in the mixed solvent. In Figure 4, the reciprocal of the viscosity of the mixed solvent is plotted against the concentration of the electrolyte salt (lithium salt) contained in the mixed solvent. The plotted reciprocals of the viscosity are distributed within a region defined by two broken lines, and there is a linear relationship. The solid line represents experimental values linearly approximated by a least-square method.

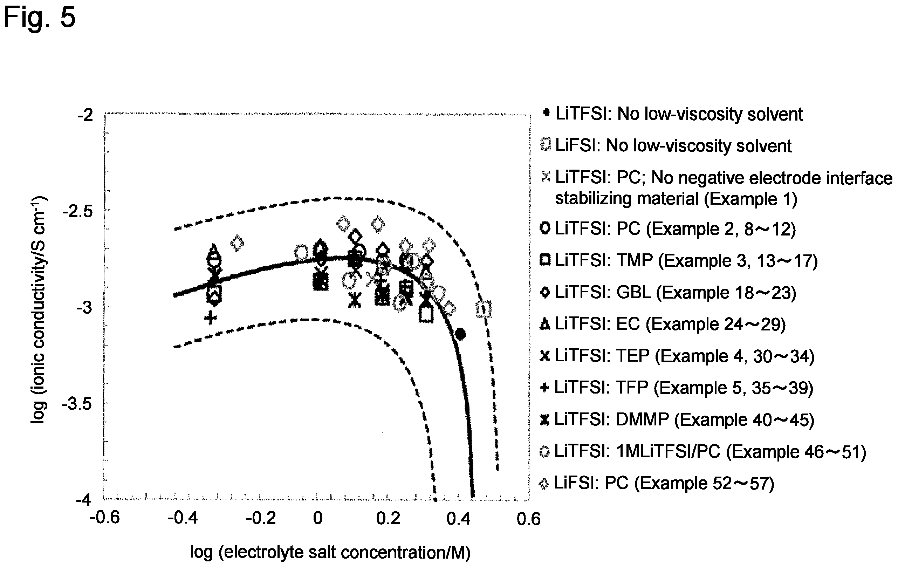

Figure 5 is a relationship diagram between the concentration of an electrolyte salt contained in a mixed solvent and the ionic conductivity of a semisolid electrolyte layer. The ionic conductivity of the semisolid electrolyte layer 50 is plotted against the concentration of the electrolyte salt on the basis of Figure 3 and the data of Figure 3, and shown in Figure 5. The solid line is a curve drawn on the basis of the solid lines (approximate expressions) shown in Figures 3 and 4. The region between two broken lines represents a composition range derived from the respective broken lines in Figures 3 and 4, and indicates a range of physical properties which can be attained by the semisolid electrolyte layer 50 in the present invention. Actually, the experimental values of the ionic conductivity of the semisolid electrolyte layer 50 are distributed within the range between the broken line curves. Figure 5 reveals that the range of concentrations [M or mol/L] of the electrolyte salt for obtaining a desired ionic conductivity of the semisolid electrolyte layer 50 can be expressed by: A ≤ Log(the concentration of the electrolyte salt) ≤ B. With regard to the solid line (result of least square fitting of experimental values), the relationship between A and the ionic conductivity σ [s/cm] of the semisolid electrolyte layer 50 is expressed by: A = 5.0721 (Log σ)² + 30.84 (Log σ) + 46.419, and the relationship between B and the ionic conductivity σ of the semisolid electrolyte layer 50 is expressed by: B = -15.013 (Log σ)³ - 132.2 (Log σ)² - 388.39 (Log σ) - 380.38 (Log σ ≥ -3). From these relationships, it has been revealed that the range of electrolyte salt concentrations in terms of Log(the concentration of the electrolyte salt) is in the range of -0.45 or more and 0.35 or less (A = -0.45, B = 0.35) for enabling achievement of an ionic conductivity of 1 mS/cm, and in the range of -0.22 or more and 0.26 or less (A = -0.22, B = 0.26) when the desired ionic conductivity is 1.5 mS/cm.

Of two broken lines shown in Figure 5, a broken line associated with a higher ionic conductivity of the semisolid electrolyte layer 50 (a curve showing a range in which the ionic conductivity of the semisolid electrolyte layer 50 is higher than the ionic conductivity on the solid line on the graph) represents a maximum value of the lithium ionic conductivity of the semisolid electrolyte layer 50 which can be attained by the semisolid electrolyte layer 50 prepared by a method according to the present invention, the relationship between A and the ionic conductivity σ is expressed by: A = 8.7195 (Log σ)² + 46.348 (Log σ) + 61.165, and the relationship between B and the ionic conductivity σ is expressed by: B = -3.8695 (Log σ)³ - 32.661 (Log σ)² - 92.013 (Log σ) - 86.09 (Log σ ≥ -3). From these relationships, it has been revealed that the range of electrolyte salt concentrations in terms of Log(the lithium salt concentration) is in the range of 0.48 or less (B = 0.48, A is not determined) for enabling achievement of an ionic conductivity of 1 mS/cm, and in the range of 0.43 or less (B = 0.43, A is not determined) and -0.41 or more and 0.41 or less (A = -0.41, B = 0.41) when the desired ionic conductivity of the semisolid electrolyte layer 50 is 1.5 mS/cm and 2 mS/cm, respectively.

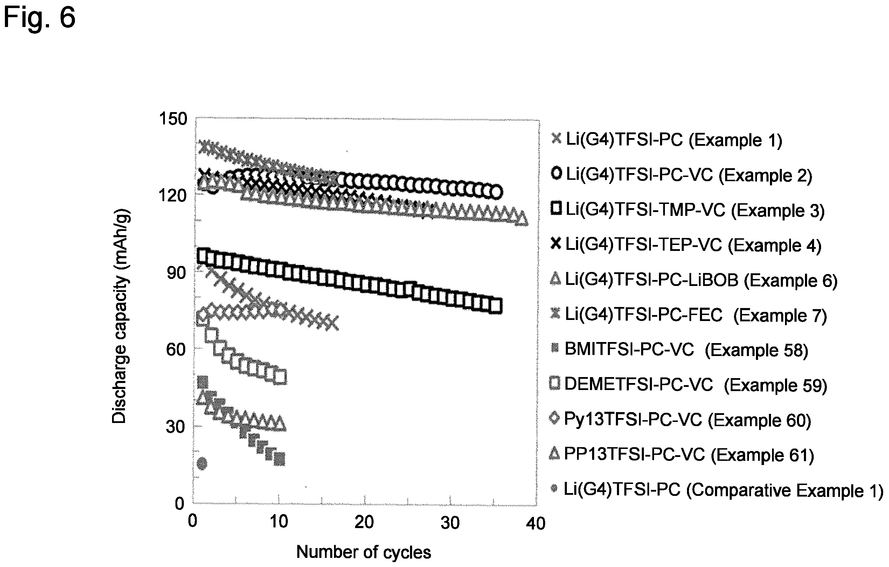

Figure 6 shows the cycle characteristics of lithium ion secondary batteries prepared in Examples 1 to 4, Example 6, Example 7, Examples 58 to 61 and Comparative Example 1. When the semisolid electrolyte contains a lithium glyme complex excellent in electrochemical stability, and propylene carbonate which is a low-viscosity organic solvent, it is possible to prepare a battery having a high capacity and excellent cycle characteristics irrespective of the composition of a negative electrode interface stabilizing material.

Further, in Examples 58 to 61, lithium ion secondary batteries were prepared using a mixture of an ionic liquid and an electrolyte salt as a semisolid electrolyte solvent, and evaluated. Unlike the lithium glyme complex, the ionic liquid has a solvent which itself includes only ions. Thus, the semisolid electrolyte layer 50 containing an ionic liquid has an ionic conductivity higher than that of the semisolid electrolyte layer 50 containing a lithium glyme complex, as shown in Figures 7 and 8.

On the other hand, as compared to the semisolid electrolyte layer 50 containing a lithium glyme complex, the semisolid electrolyte layer 50 containing an ionic liquid has less sufficient electrochemical stability, resulting in more remarkable capacity degradation. In addition, as compared to a lithium glyme complex, an ionic liquid has a higher viscosity, so that ions are more slowly transported during battery operation. Thus, in a lithium ion secondary battery including the semisolid electrolyte layer 50 containing an ionic liquid, only a limited discharge capacity of 75 mAh/g or less can be obtained. The above results show that the semisolid electrolyte layer 50 containing a lithium glyme complex is more excellent from the viewpoint of electrochemical stability.

### Reference Signs List

- 10: Positive electrode current collector
- 20: Negative electrode current collector
- 30: Battery case
- 40: Positive electrode mixture layer
- 50: Semisolid electrolyte layer
- 60: Negative electrode mixture layer
- 70: Positive electrode
- 80: Negative electrode
- 100: Secondary battery

All the publications, patents and patent applications cited herein are incorporated herein by reference in their entirety.

## Claims

1. A semisolid electrolyte layer comprising: a semisolid electrolyte comprising particles, and a semisolid electrolytic solution including a semisolid electrolyte solvent and a low-viscosity organic solvent; and a semisolid electrolyte binder, wherein
the ratio of the low-viscosity organic solvent is 10% by weight or more per 100% by weight of a mixed solvent of the semisolid electrolyte solvent and the low-viscosity organic solvent.

2. The semisolid electrolyte layer according to claim 1, wherein the ratio of the low-viscosity organic solvent is 10% by weight or more and 93% by weight or less per 100% by weight of the mixed solvent of the semisolid electrolyte solvent and the low-viscosity organic solvent.

3. The semisolid electrolyte layer according to claim 1, wherein the semisolid electrolytic solution further comprises a negative electrode interface stabilizing material.

4. The semisolid electrolyte layer according to claim 1, wherein the semisolid electrolyte solvent comprises a lithium glyme complex.

5. The semisolid electrolyte layer according to claim 3, wherein the negative electrode interface stabilizing material is vinylene carbonate.

6. The semisolid electrolyte layer according to claim 1, wherein
the semisolid electrolyte solvent and/or the low-viscosity organic solvent comprises an electrolyte salt, and
Log(the concentration (mol/l) of the electrolyte salt in the mixed solvent of the semisolid electrolyte solvent and the low-viscosity organic solvent) is -0.45 or more and 0.35 or less.

7. The semisolid electrolyte layer according to claim 6, wherein Log(the concentration (mol/l) of the electrolyte salt in the mixed solvent of the semisolid electrolyte solvent and the low-viscosity organic solvent) is -0.22 or more and 0.26 or less.

8. A battery cell sheet comprising the semisolid electrolyte layer according to claim 1, and an electrode.

9. A secondary battery comprising the semisolid electrolyte layer according to claim 1, a positive electrode and a negative electrode.
